# EUROPÄISCHE PATENTANMELDUNG

(11) **EP 1 088 709 A2**
(43) Veröffentlichungstag der Anmeldung: **04.04.2001**
(21) Anmeldenummer: 00116739.4
(22) Anmeldetag: 03.08.2000
(51) Int. Cl.: B60R 21/18

(54) **Aufblasbarer Sicherheitsgurt**

(30) Priorität: 30.09.1999 DE 19946912
(71) Anmelder: Bayerische Motoren Werke Aktiengesellschaft, 80809 München (DE)
(72) Erfinder: Meister, Markus, 81245 München (DE); Sertl, Hans-Peter, 95478 Kemnath (DE); Hardtmann, Dirk, 80995 München (DE); Bürkle, Jörg, 85354 Freising (DE); Taubenberger, Josef, 83052 Bruckmühl (DE); Schaper, Jens, Dr., 80335 München (DE)

(57) **Zusammenfassung**

Aufblasbarer Sicherheitsgurt für Kraftfahrzeuge, bestehend aus einem Gurtband, das durch eine Gurtzunge in einen am Oberkörper eines Insassen anliegenden Diagonalbereich und in einen am Becken des Insassen anliegenden Horizontalbereich unterteilt ist, einem am Fahrzeug befestigten Gurtschloß, mit dem die Gurtzunge lösbar verbindbar ist, einem am Fahrzeug befestigten Aufrollautomaten, mit dem der Diagonalbereich des Gurtbandes verbunden ist, einem am Fahrzeug befestigten Beschlag, mit dem der Horizontalbereich des Gurtbandes verbunden ist, einem an dem Diagonalbereich und/oder dem Horizontalbereich des Gurtbandes befestigten oder mit diesem integrierten Luftsack und einem Gasgenerator, der über das Gurtschloß und die Gurtzunge mit dem Luftsack verbunden ist. In dem Gurtschloß 18 und in der Gurtzunge 12 ist ein Gaskanal 46, 56 angeordnet, wobei die beiden Gaskanäle konzentrisch sind. In einer Bohrung 32 des Gurtschlosses 18 ist eine den Gaskanal 46 umgebende Hülse 34 verschiebbar geführt, deren oberes Ende mit einem Deckel 36 verschlossen ist. Der Deckel 36 der Hülse 34 ist mit einer Sollbruchstelle versehen, die unter einem bestimmten Gasdruck aufplatzt. Der in der Gurtzunge 12 angeordnete Gaskanal 56 ist an seinem dem Gurtschloß 18 zugekehrten unteren Endbereich 52 konisch erweitert, wobei der mittlere Durchmesser dieses konischen Endbereichs näherungsweise dem Durchmesser der Hülse 34 entspricht.

## Beschreibung

Die Erfindung betrifft einen aufblasbaren Sicherheitsgurt für Kraftfahrzeuge, bestehend aus einem Gurtband, das durch eine Gurtzunge ein einen am Oberkörper eines Insassen anliegenden Diagonalbereich und in einen am Becken des Insassen anliegenden Horizontalbereich unterteilt ist, einem am Fahrzeug befestigten Gurtschloß, mit dem die Gurtzunge lösbar verbindbar ist, einem am Fahrzeug befestigten Aufrollautomaten, mit dem der Diagonalbereich des Gurtbandes verbunden ist, einem am Fahrzeug befestigten Beschlag, mit der der Horizontalbereich des Gurtbandes verbunden ist, einem an dem Diagonalbereich und/oder an dem Horizontalbereich des Gurtbandes befestigten oder mit diesem integrierten Luftsack und einem Gasgenerator, der über das Gurtschloß und die Gurtzunge mit dem Luftsack verbunden ist, wobei in dem Gurtschloß und in der Gurtzunge ein Gaskanal angeordnet ist.

Bei einem in der älteren Patentanmeldung Nr. 198 52 314.9 beschriebenen aufblasbaren Sicherheitsgurt dieser Gattung ist das Gurtschloß im Mündungsbereich des Gaskanals mit einer Ringnut versehen, die über Radialbohrungen mit dem Gaskanal in Verbindung steht, In diese Ringnut ist eine zylindrische Dichtung eingesetzt. Beim Auslösen des Gasgenerators wird die hintere Stirnfläche der Dichtung mit dem Gasdruck beaufschlagt, so daß ihre vordere Stirnflache gasdicht an eine entsprechende Gegenfläche der Gurtzunge angedrückt wird. Da diese Abdichtung nur bei einem Unfall wirksam wird, kann ein Verschleiß der eigentlichen Dichtung vermieden werden, und die zum Verbinden und Trennen der Gurtzunge mit bzw. von dem Gurtschloß erforderlichen Kräfte können verringert werden.

Die vorliegende Erfindung betrifft eine Weiterbildung des gattungsgemäßen aufblasbaren Sicherheitsgurts hinsichtlich der Abdichtung zwischen der Gurtzunge und dem Gurtschloß.

Diese Weiterbildung ist dadurch gekennzeichnet, daß die beiden Gaskanäle konzentrisch sind, daß in einer Bohrung des Gurtschlosses eine den Gaskanal umgebende Hülse verschiebbar geführt ist, deren oberes Ende mit einem Deckel verschlossen ist, daß der in der Gurtzunge angeordnete Gaskanal an seinem dem Gurtschloß zugekehrten unteren Endbereich konisch erweitert ist, wobei der mittlere Durchmesser dieses konischen Endbereichs näherungsweise dem Durchmesser der Hülse entspricht, und daß der Deckel der Hülse mit einer Solibruchstelle versehen ist.

Wenn die Hülse mit einem Gasdruck beaufschlagt wird, dann bewegt sie sich in dem Gurtschloß nach oben, bis sie an dem sich nach oben konisch verjüngenden Gaskanal der Gurtzunge dichtend zur Anlage gelangt, woraufhin die Solibruchstelle im Deckel aufplatzt, so daß das Gas überströmen kann.

Bei einer in fertigungstechnischer Hinsicht besonders vorteilhaften Ausführungsform ist vorgesehen, daß in eine Sackbohrung der Gurtzunge ein Konus eingesetzt ist. Dieser Konus kann aus einem elastischen Material bestehen und in die Sackbohrung fest eingepreßt sein. Der Konus kann aber auch aus einem starren Material bestehen und in der Sackbohrung verschiebbar gelagert sein. In diesem Fall ist es vorteilhaft, wenn der Konus von einer zerstörbaren Fixierung in der Sackbohrung gehalten ist.

Die Hülse weist vorzugsweise einen Ringflansch auf, der in einer Sackbohrung des Gurtschlosses geführt ist. Falls der Gasgenerator gezündet wird, ohne daß die Gurtzunge in das Gurtschloß eingesetzt ist, dann kann sich die Hülse nur soweit nach oben bewegen, bis ihr Ringflansch an der Einschnürung der Sackbohrung zur Anlage gelangt. Dadurch wird eine mögliche Gefährdung der Insassen durch die Hülse ausgeschlossen. Eine weitere Sicherheitsvorkehrung besteht darin, daß die Hülse mit einer seitlichen Öffnung versehen ist, die in der durch den Ringflansch definierten oberen Endstellung der Hülse mit einer in der Gurtzunge ausgebildeten Querbohrung fluchtet. Wenn der Gasgenerator bei nicht gesteckter Gurtzunge gezündet wird, dann kann das Treibgas durch die einen Bypasskanal bildende Querbohrung vom Insassen weg seitlich ausströmen, so daß ein Aufreißen des Deckels der Hülse und ein Ausströmen des Treibgases nach oben verhindert wird.

Damit die Funktionsfähigkeit bzw. die Dichtwirkung nicht durch eindringende Fremdkörper oder Staub beeinträchtigt werden kann, ist vorgesehen, daß die Öffnung des in der Gurtzunge und im Gurtschloß ausgebildeten Kanals mit einer Staubkappe verschlossen ist, die von der Hülse durchstoßen werden kann.

Zwei Ausführungsbeispiele der Erfindung sind in den Zeichnungen dargestellt und werden nachfolgend näher erläutert. Es zeigt:
Fig. 1 eine perspektivische Darstellung des Innenraums eines Personenkraftwagens,
Fig. 2 einen Schnitt durch das dem Gurtschloß und der Gurtzunge zugeordnete Gasführungssystem,
Fig. 3 einen Schnitt nach der Linie B-B in Fig. 2, und
Fig. 4 einen Schnitt durch ein abgewandeltes Gasführungssystem.

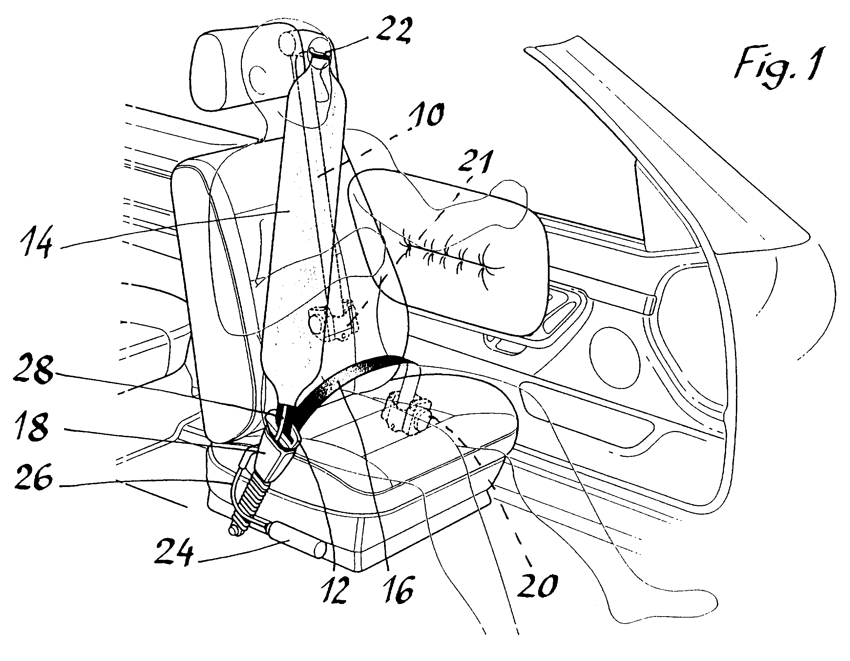

In Fig. 1 der Zeichnung ist der Einfachheit halber nur der dem linken Vordersitz zugeordnete Sicherheitsgurt gezeigt. Dieser Sicherheitsgurt besteht aus einem Gurtband 10, das in bekannter Weise durch eine Gurtzunge 12 in einen am Oberkörper eines Insassen anliegenden Diagonalbereich 14 und in einen am Becken des Insassen anliegenden Horizontalbereich 16 unterteilt ist. Die Gurtzunge 12 kann in bekannter Weise in ein am Fahrzeug befestigtes Gurtschloß 18 eingesetzt und mit diesem lösbar verriegelt werden. Dem Führungsschlitz der Gurtzunge 12 ist ein (nicht gezeigter) Klemmverschuß zugeordnet, so daß das Gurtband 10 normalerweise an einer Relativbewegung gegenüber der Gurtzunge 12 gehindert ist und sich erst nach Überschreiten einer bestimmten Axialkraft gegenüber der Gurtzunge bewegen kann. Das freie Ende des Horizontalbereichs 16 des Gurtbandes 10 ist mit einem herkömmlichen unteren Aufrollautomaten 20 verbunden, der am Fahrzeug befestigt ist. Der Diagonalbereich 14 des Gurtbandes 10 ist um einen Bandumlenkbeschlag 22 herumgeführt und mit einem oberen herkömmlichen Aufrollautomaten 21 verbunden. Der Bandumlenkbeschlag 22 ist über dem Kopf eines Insassen von durchschnittlicher Größe angeordnet. Der Diagonalbereich 14 des Gurtbandes 10 ist als Luftsack ausgebildet bzw. der Luftsack ist in das Gurtband integriert. Es könnte aber auch ein getrennter schlauchförmiger Luftsack vorgesehen sein, der mit seinen beiden Enden an dem Diagonalbereich 14 des Gurtbandes 10 befestigt ist.

Neben dem Vordersitz ist ein Gasgenerator 24 angeordnet, der über einen Gaszuführschlauch 26 mit einem Gaskanal des Gurtschlosses 18 verbunden ist. Der Gaskanal des Gurtschlosses 18 steht mit einem Gaskanal der eingesetzten Gurtzunge 12 in Verbindung, wie dies nachfolgend noch naher erläutert wird. Der Gaskanal der Gurtzunge 12 ist seinerseits über einen Gaszuführschlauch 28 mit dem als Luftsack ausgebildeten Diagonalbereich 14 des Gurtbandes 10 verbunden.

Wenn der Sicherheitsgurt nicht benötigt wird und die Gurtzunge 12 vom Gurtschloß getrennt ist, dann wird das Gurtband 10 von dem oberen und dem unteren Aufrollautomaten 21, 20 aufgewickelt. Dadurch ist eine definierte Ruhelage des Diagonalbereichs 14 gewahrleistet. Wenn ein Insasse den Sicherheitsgurt anlegen will, dann erfaßt er die Gurtzunge 12 und zieht diese über sein Becken hinweg zu dem Gurtschloß 18 hin, um sie mit diesem zu verriegeln. Bei diesem Vorgang wird das Gurtband 10 lediglich von dem unteren Aufrollautomaten 20 abgezogen. Wenn sich der Insasse nach erfolgtem Anschnallen jedoch mit dem Oberkörper nach vorne bewegen will, dann ist dies ohne weiteres möglich, weil die erforderliche Länge des Gurtbandes 10 von dem oberen Aufrollautomaten 21 abgezogen werden kann. Wenn der Insasse sodann in seine Normalstellung zurückkehrt, dann wird das Gurtband 10 von dem oberen Aufrollautomaten 21 aufgewickelt, bis der Diagonalbereich 14 wieder seine in Fig. 1 gezeigte Position einnimmt.

Bei einem Aufprall des Fahrzeugs auf ein Hindernis wird der Gasgenerator 24 ausgelöst, um den als Luftsack ausgebildeten Diagonalbereich 14 des Gurtbandes 10 aufzublasen, und der obere und der untere Aufrollautomat 21, 20 werden in bekannter Weise gegen ein Abwickeln des Gurtbandes 10 gesperrt.

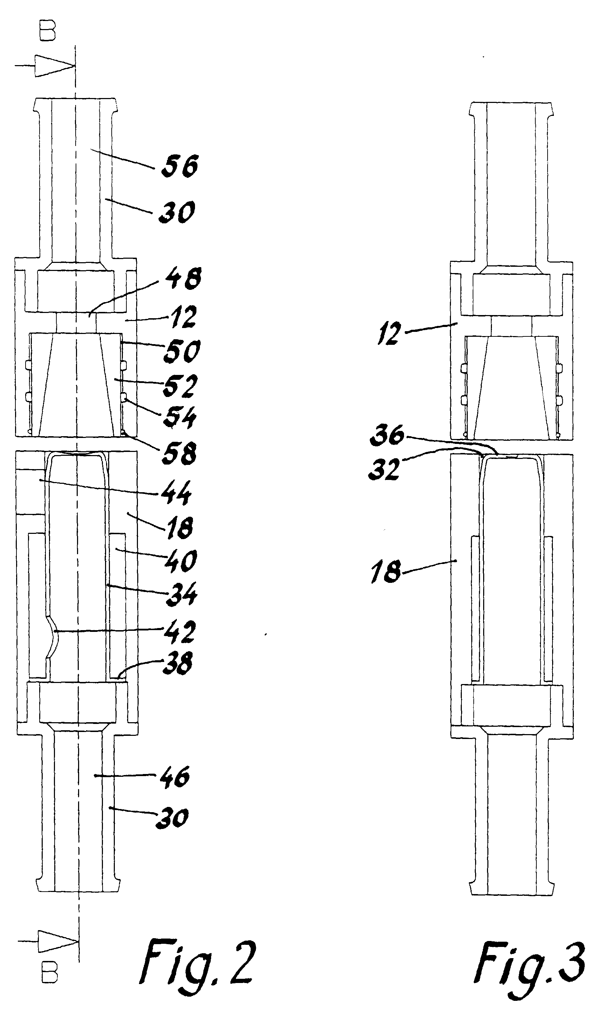

Wenn die Gurtzunge 12 in das Gurtschloß 18 gesteckt ist, dann liegen Bereiche dieser beiden Teile in der in Fig. 2 gezeigten Weise einander gegenüber. Mit der Gurtzunge 12 und dem Gurtschloß 18 ist jeweils ein Rohrstutzen 30 gasdicht verbunden, beispielsweise verschraubt oder verpreßt. Dieser Rohrstutzen 30 dient zum Anschluß des Gaszuführschlauchs 26 bzw. 28. Im Gurtschloß 18 ist eine Bohrung 32 ausgebildet, in der eine Hülse 34 verschiebbar geführt ist. Der Deckel 36 der Hülse 34 ist mit einer als Sollbruchstelle dienenden Schwächungslinie versehen. Der untere Rand der Hülse 34 ist nach außen umgebördelt, um einen Ringflansch 38 zu bilden. Der untere Bereich des Gurtschlosses 18 weist eine den Ringflansch 38 der Hülse 34 aufnehmende Sackbohrung 40 auf. Die Hülse 34 und das Gurtschloß 18 sind mit einer seitlichen Öffnung 42 bzw. mit einer Querbohrung 44 versehen. Aus einem nachfolgend noch näher erläuterten Grund ist die Lage der Öffnung 42 und der Querbohrung 44 so gewählt, daß sie miteinander fluchten, wenn der Ringflansch 38 der Hülse 34 am Boden der Sackbohrung 40 des Gurtschlosses 18 anliegt. Der Rohrstutzen 30, die Sackbohrung 40 und die Bohrung 32 des Gurtschlosses 18 bilden einen Gaskanal 46.

Abweichend von dem gezeigten Ausführungsbeispiel könnte im Bereich der Bohrung 32 des Gurtschlosses 18 eine Ringdichtung vorgesehen sein.

In der Gurtzunge 12 ist ebenfalls eine Bohrung 48 und eine Sackbohrung 50 ausgebildet. In die Sackbohrung 50 ist ein Konus 52 aus einem starren Material verschiebbar eingesetzt. Die Abdichtung zwischen Konus 52 und Gurtzunge 12 wird durch Dichtringe 54 erreicht. Der Konus 52 ist mit einer zerstörbaren Fixierung 58, wie z. 6. Rastzapfen oder dergleichen, in der Sackbohrung 50 der Gurtzunge 12 gehalten. Der mittlere Durchmesser des Konus 52 entspricht näherungsweise dem Durchmesser der Hülse 34. Der Konus 52, die Bohrung 48 und der Rohrstutzen 30 bilden in der Gurtzunge 12 einen Gaskanal 56. In der in Fig. 2 gezeigten Steckstellung der Gurtzunge sind die beiden Gaskanäle 46 und 56 konzentrisch angeordnet.

Wenn bei einem Unfall der Gasgenerator 24 gezündet wird, dann wird der Gaskanal 46 des Gurtschlosses 18 über den Gaszuführschlauch 26 mit Druck beaufschlagt. Unter diesem Druck wird die Hülse 34 in der Bohrung 32 des Gurtschlosses 18 nach oben geschoben, bis sie an dem Konus 52 der Gurtzunge 12 zur Anlage gelangt. Wenn der in der Hülse 34 herrschende Gasdruck einen bestimmten Wert überschreitet, dann platzt die im Deckel 36 der Hülse 34 angeordnete Schwächungslinie auf, so daß das Gas in die Gurtzunge 12 überströmen kann. Wegen der von dem Konus 52 auf die Hülse 34 ausgeübten Keilwirkung wird eine gasdichte Verbindung erhalten. Von der Gurtzunge 12 strömt das Gas durch den Gaszuführschlauch 28 in den als Luftsack ausgebildeten Diagonalbereich 14 des Gurtbandes 10, um diesen aufzublasen.

Nach erfolgtem Auslösen des Gasgenerators kann der Insasse den Sicherheitsgurt in üblicher Weise öffnen, und die Bandzunge 12 kann aus dem Gurtschloß 18 herausgezogen werden. Dabei wird die am Konus 52 anhaftende Hülse 34 aus dem Gurtschloß 18 herausgezogen, bis sie mit ihrem Ringflansch 38 am Boden der Sackbohrung 40 zur Anlage gelangt. Unter der von der Hülse 34 auf den Konus 52 ausgeübten Kraft wird die Fixierung 58 zerstört, so daß der Konus aus der Sackbohrung 50 herausgezogen werden kann.

Falls der Gasgenerator 24 bei nicht gesteckter Gurtzunge 12 ausgelöst wird, dann wird die Hülse 34 unter dem Gasdruck so weit nach oben bewegt, bis ihr Ringflansch 38 am Boden der Sackbohrung 40 zur Anlage gelangt. In dieser Stellung der Hülse 34 relativ zum Gurtschloß 18 fluchtet die Öffnung 42 der Hülse 34 mit der Querbohrung 44 des Gurtschlosses, so daß das Gas seitwärts ausströmen kann. Dadurch wird ein Aufplatzen des Deckels der Hülse 34 und ein Ausströmen des Gases nach oben verhindert.

Abweichend von dem gezeigten Ausführungsbeispiel könnte mit der Gurtzunge 12 ein in den Konus 52 hineinragender Stift verbunden sein. Wenn nach einem Zünden des Gasgenerators die Hülse 34 in den Konus 52 hinein gedrückt wird, dann wird ihr Deckel 36 von dem Stift durchbohrt, so daß das Gas von dem Gurtschloß 18 in die Gurtzunge 12 überströmen kann.

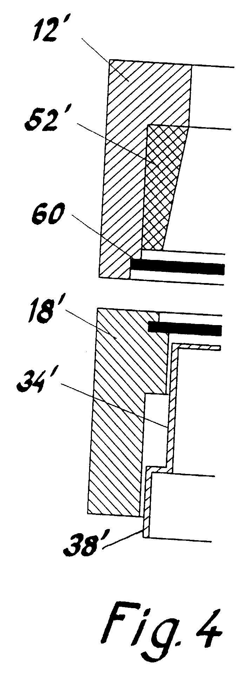

In Fig. 4 ist eine abgewandelte Ausführungsform dargestellt. Da die hier interessierenden Teile der Gurtzunge und des Gurtschlosses zur Achse der Bohrungen symmetrisch ausgebildet sind, ist jeweils nur die linke Hälfte gezeigt. Bei dieser Ausführungsform ist der Ringflansch 38' der Hülse 34' nach unten verlängert, so daß sich in der Sackbohrung 40' eine bessere Führung ergibt. In die Bohrung 32' des Gurtschlosses 18' ist eine Staubkappe 60 eingesetzt. In die Sackbohrung 50' der Gurtzunge 12' ist ebenfalls eine Staubkappe 60 eingesetzt. Bei dieser Ausführungsform besteht der Konus 52' aus einem elastischen Material, und er ist in die Sackbohrung 50' fest eingesetzt, beispielsweise eingepreßt. Wenn die Hülse 34' beim Zünden des Gasgenerators mit Druck beaufschlagt wird, dann bewegt sie sich im Gurtschloß 18' nach oben, wobei sie die beiden Staubkappen 60, 60 durchstößt, bis sie am Konus 52' dichtend zur Anlage gelangt. Beim Abschnallvorgang wird die Hülse 34' zusammen mit der Bandzunge 12' aus dem Gurtschloß 18' herausgezogen. Da der Konus 52' aus einem elastischen Werkstoff besteht, können einerseits Fertigungs- und Lagetoleranzen zwischen den beiden Gaskanälen und andererseits das Spiel zwischen Gurtschloß 18' und Gurtzunge 12' (führt zu einem Abknicken der Wirkungslinien) ausgeglichen werden.

Abweichend von den gezeigten Ausführungsbeispielen kann der Gasführungskanal auf zwei Kanäle aufgeteilt und seitlich neben dem Gurtschloß angeordnet werden. Durch diese Maßnahme können die Abmessungen der Anordnung verringert werden.

### Bezugszeichenliste:

- 10: Gurtband
- 12: Gurtzunge
- 12: Diagonalbereich
- 16: Horzontalbereich
- 18: Gurtschloß
- 20: unterer Aufrollautomat
- 21: oberer Aufrollautomat
- 22: Bandumlenkbeschlag
- 24: Gasgenerator
- 26: Gaszuführschlauch an 18
- 28: Gaszuführschlauch an 12
- 30: Rohrstutzen
- 32: Bohrung in 18
- 34: Hülse
- 36: Deckel
- 38: Ringflansch
- 40: Sackbohrung in 18
- 42: Öffnung
- 44: Querbohrung
- 46: Gaskanal in 18
- 48: Bohrung in 12
- 50: Sackbohrung in 12
- 52: Konus
- 54: Dichtringe
- 56: Gaskanal in 12
- 58: Fixierung
- 60: Staubkappe

## Patentansprüche

1. Aufblasbarer Sicherheitsgurt für Kraftfahrzeuge, bestehend aus einem Gurtband, das durch eine Gurtzunge in einen am Oberkörper eines Insassen anliegenden Diagonalbereich und in einen am Becken des Insassen anliegenden Horizontalbereich unterteilt ist, einem am Fahrzeug befestigten Gurtschloß, mit dem die Gurtzunge lösbar verbindbar ist, einem am Fahrzeug befestigten Aufrollautomaten, mit dem der Diagonalbereich des Gurtbandes verbunden ist, einem am Fahrzeug befestigten Beschlag, mit dem der Horizontalbereich des Gurtbandes verbunden ist, einem an dem Diagonalbereich und/oder dem Horizontalbereich des Gurtbandes befestigten oder mit diesem integrierten Luftsack und einem Gasgenerator, der über das Gurtschloß und die Gurtzunge mit dem Luftsack verbunden ist, wobei in dem Gurtschloß und in der Gurtzunge ein Gaskanal angeordnet ist, dadurch **gekennzeichnet**, daß die beiden Gaskanäle (46, 56) konzentrisch sind, daß in einer Bohrung (32) des Gurtschlosses (18) eine den Gaskanal (46) umgebende Hülse (34) verschiebbar geführt ist, deren oberes Ende mit einem Deckel (36) verschlossen ist, daß der in der Gurtzunge (12) angeordnete Gaskanal (56) an seinem dem Gurtschloß (18) zugekehrten unteren Endbereich (52) konisch erweitert ist, wobei der mittlere Durchmesser dieses konisches Endbereichs 52 näherungsweise dem Durchmesser der Hülse (34) entspricht, und daß der Deckel (36) der Hülse (34) mit einer Sollbruchstelle versehen ist.

2. Aufblasbarer Sicherheitsgurt nach Anspruch 1, dadurch **gekennzeichnet**, daß in eine Sackbohrung (50) der Gurtzunge (12) ein Konus (52) eingesetzt ist.

3. Aufblasbarer Sicherheitsgurt nach Anspruch 2, dadurch **gekennzeichnet**, daß der Konus (52') aus einem elastischen Material besteht und in die Sackbohrung (50') fest eingepreßt ist.

4. Aufblasbarer Sicherheitsgurt nach Anspruch 2, dadurch **gekennzeichnet**, daß der Konus (52) aus einem starren Material besteht und in der Sackbohrung (50) verschiebbar gelagert ist

5. Aufblasbarer Sicherheitsgurt nach Anspruch 4, dadurch **gekennzeichnet**, daß der Konus (52) von einer zerstörbaren Fixierung (58) in der Sackbohrung (50) gehalten ist.

6. Aufblasbarer Sicherheitsgurt nach einem der vorhergehenden Ansprüche, dadurch **gekennzeichnet**, daß die Hülse (34) einen Ringflansch (38) aufweist, der in einer Sackbohrung (40) des Gurtschlosses (18) geführt ist.

7. Aufblasbarer Sicherheitsgurt nach Anspruch 6, dadurch **gekennzeichnet**, daß die Hülse (34) mit einer seitlichen Öffnung (42) versehen ist, die in der oberen Endstellung der Hülse mit einer in der Gurtzunge (12) ausgebildeten Querbohrung (44) fluchtet.

8. Aufblasbarer Sicherheitsgurt nach einem der vorhergehenden Ansprüche, dadurch **gekennzeichnet**, daß die Öffnung des in der Gurtzunge (12') und dem Gurtschloß (18') ausgebildeten Gaskanals mit einer Staubkappe (60) verschlossen ist, die von der Hülse (34') durchstoßen werden kann.
